# EUROPEAN PATENT APPLICATION

(11) **EP 4 793 606 A1**
(43) Date of publication of application: **19.08.2026**
(21) Application number: 25157562.7
(22) Date of filing: 13.02.2025
(51) Int. Cl.: G01K 7/02, G01K 1/143, G01K 1/16

(54) **THIN-FILM TEMPERATURE SENSOR ARRANGEMENT**

(71) Applicant: Alfa Laval Corporate AB, 221 00 Lund (SE)
(72) Inventor: BUSHLYA, Volodymyr, 221 00 LUND (SE); DALELKHAN, Bekmurat, 221 00 LUND (SE); KNUTSSON, Axel, 221 00 LUND (SE); LENRICK, Filip, 221 00 LUND (SE)
(74) Representative: Alfa Laval Attorneys

(57) **Abstract**

A thin-film temperature sensor arrangement comprising
a metal substrate,
a thin-film adhesion and electrical insulation layer on the metal substrate, and
a thin-film temperature sensor on the thin-film adhesion and insulation layer,
wherein the thin-film adhesion and insulation layer comprises an inorganic oxide, an inorganic nitride or an inorganic oxynitride.

## Description

### Technical Field

The present disclosure relates to thin-film temperature sensors, and more specifically to thin-film temperature sensors for measuring temperatures inside heat exchangers, such as inside gasketed plate heat exchangers (GPHE).

### Background

Heat exchangers are widely used in various industries to transfer heat between two fluids, playing a crucial role in processes such as refrigeration, air conditioning, power generation, chemical processing, and oil refining.

Among the many types of heat exchangers, gasketed plate heat exchangers (GPHE) are commonly utilized for their efficient heat transfer, compact size, and ability to handle various fluids under different temperature and pressure conditions. A typical GPHE consists of a series of heat exchanger plates stacked together, with gaskets placed between adjacent plates to form separate channels for the fluids.

Due to fouling build up, heat transfer capacity and performance of the GPHE reduces over time. This can result in decreased energy efficiency, increased energy consumption, increased carbon emissions and increased operation expenses. With regular maintenance the impact of fouling, can be reduced, increasing energy efficiency, lowering energy consumption, reducing carbon emissions, and optimizing life-cycle cost.

A critical parameter in the operation of a GPHE is the fluid temperature at different locations within the heat transfer area. Accurate temperature measurements can help to indicate fouling, ensure optimal heat transfer, monitor thermal performance, and maintain system efficiency.

Traditional methods of temperature sensing in GPHEs often involve external temperature sensors, that are either mounted on the heat exchanger surface or inserted into the fluid streams. However, measuring the temperature between the plates of a GPHE) is challenging for several reasons:
1. Limited Space Between Plates
   The spacing between the plates in a GPHE is typically very narrow, often just a few millimeters. This makes it difficult to insert traditional temperature sensors like thermocouples or RTDs into the space without disrupting the fluid flow or causing pressure drops. The compact design of GPHEs limits access for external sensors.
2. Fluid Flow Disruption
   Introducing temperature sensors into the fluid channels can create obstructions that affect the flow dynamics. Any disruption to the fluid flow can reduce heat transfer efficiency, cause localized turbulence, and increase pressure drops, which negatively impacts the overall performance of the heat exchanger and corrupts a temperature reading, making it unrepresentative of the normal GPHE's operation.
3. Thermal Lag and Accuracy
   External sensors mounted on the exterior of the plates, or sensors that measure temperature at points away from the actual heat transfer surfaces, can introduce thermal lag or inaccurate readings due to the heat dissipation through the plate material. This can lead to incorrect data about the actual fluid temperatures or plate surface temperatures inside the channels.
4. Mechanical Integrity
   Traditional temperature sensors, such as probes or thermocouples, need to be securely mounted or embedded in the plates, which can weaken the structure of the heat exchanger plate or compromise its sealing ability. Additionally, any mechanical penetration of the plates or gaskets can lead to potential leaks or corrosion, especially if the fluids are corrosive or the heat exchanger operates under high pressures.
5. High-Temperature and High-Pressure Environments
   GPHEs often operate under extreme conditions of temperature and pressure. Conventional sensors might not withstand these harsh conditions or might degrade over time, leading to reliability issues. The integration of sensors into the plates in such conditions requires materials that can resist high temperatures, pressure fluctuations, and potential chemical exposure.
6. Gasket Interference
   GPHEs use gaskets to seal between plates and separate the fluid streams. Any attempt to integrate or mount a sensor in these areas might interfere with the gasket's sealing function, leading to potential fluid leakage or cross-contamination between the fluids.
7. Non-uniform Temperature Distribution
   In GPHEs, the temperature distribution across the plate is not always uniform. The fluid temperatures may vary due to flow patterns, heat load, or fouling over time. Measuring temperature at a single point might not provide an accurate reflection of the temperature across the entire heat transfer surface.

Due to these challenges, temperature is most commonly measured only at the inlets and outlets of the GPHE.

One solution contemplated for measuring temperatures inside GPHEs are so-called thin-film temperature sensors. A thin-film temperature sensor is a device that utilizes a thin layer of conductive or semiconductive material, deposited on a substrate, to measure temperature. These sensors typically operate based on the principle that either the electrical resistance of the thin-film material changes with temperature (so-called Resistive Temperature Detectors (RTDs)) or that an electric output as a result of a thermoelectric Peltier-Seebeck effect changes with temperature (so-called Thermocouples).

However, integrating thin-film temperature sensors on a heat exchanger plate presents several technical challenges. The metal substrate is typically made of stainless steel, aluminum, titanium, copper, or an alloy thereof. Stainless steel is often preferred because of its corrosion resistance, strength, thermal conductivity, hygienic properties, and resistance to high temperatures. Integrating thin-film temperature sensors on a metal substrate, and particularly on a stainless substrate has been found to be difficult. Integrating a thin-film temperature sensor onto a stainless steel surface presents challenges such as adhesion issues, thermal expansion mismatch, surface preparation, oxidation, and electrical insulation requirements. Therefore, there remains a need for improved thin-film temperature sensor arrangements that addresses at least some of these issues.

### Summary

In view of the above, the present disclosure provides an improved or alternative solution having the features set out in the independent claims.

The present disclosure provides an improved thin-film temperature sensor arrangement which eliminates or ameliorates at least some of the drawbacks of existing solutions.

The present disclosure addresses the needs set out above by providing a thin-film temperature sensor arrangement suitable for a metal substrate, which in addition to suitable temperature measurement capability, also provides good adhesion between the thin-film temperature sensor and a metal substrate, mechanical stability, chemical and corrosion resistance, and electrical insulation to prevent electrical interference that could otherwise cause measurement errors or noise.

More specifically, the disclosure provides an improved thin-film temperature sensor arrangement, suitable for measuring temperatures in gasketed plate heat exchangers (GPHE) which eliminates or ameliorates at least some of the drawbacks of existing solutions.

According to a first aspect, there is provided a thin-film temperature sensor arrangement comprising
a metal substrate,
a thin-film adhesion and electrical insulation layer on the metal substrate, and
a thin-film temperature sensor on the thin-film adhesion and insulation layer,
wherein the thin-film adhesion and insulation layer comprises an inorganic oxide, an inorganic nitride, or an inorganic oxynitride.

A thin-film temperature sensor is a device that utilizes one or more thin layer(s) of conductive or semiconductive material, deposited on a substrate, to measure temperature. These sensors typically operate based on the principle that the electrical resistance of the thin-film material or an electric output as a result of a thermoelectric Peltier-Seebeck effect changes with temperature. The thin layer(s), often made from materials such as metals, metal oxides, or semiconductors, is deposited on the substrate using techniques like chemical vapor deposition, physical vapor deposition, sputtering, or cathodic arc deposition, or a combination of two or more thereof. The thin-film temperature sensor typically comprises a sensing portion and electrical leads extending to a connection point. The design of the thin-film temperature sensors enables accurate, rapid temperature detection with minimal thermal mass, making it ideal for applications where fast response times and high spatial resolution are desired. The thin-film adhesion and electrical insulation layer and the thin-film temperature sensor are preferably integrated in or on the metal substrate. The term integrated as used herein in connection with the thin-film temperature sensor arrangement refers to the seamless incorporation of the thin-film adhesion and electrical insulation layer and the thin-film temperature sensor, including both the sensing portion and the electrical leads, directly onto the surface of the metal substrate. The integration may for example involve embedding or depositing the thin-film sensor material onto the metal substrate using techniques like chemical vapor deposition, physical vapor deposition, atomic layer deposition, sputtering, or cathodic arc deposition, or a combination of two or more thereof.

A thin-film temperature sensor arrangement as described herein refers generally to a thin-film temperature sensor arranged on a metal substrate. The metal substrate may be any metal substrate on which a thin-film temperature sensor can be deposited. In some embodiments, the metal substrate is a metal part of a heat exchanger. In some embodiments, the metal substrate is a heat exchanger plate for a gasketed plate heat exchanger (GPHE). The thin-film temperature sensor is preferably arranged on a heat transfer area of the heat exchanger plate.

In some embodiments, the metal substrate is made from a metal selected from the group consisting of stainless steel, aluminum, titanium, copper, or an alloy thereof, and more preferably stainless steel.

In some embodiments, the thin-film temperature sensor comprises a sensing portion and electrical leads.

Thin-film temperature sensors are typically made from materials that exhibit stable and predictable electrical properties or thermoelectrical effects in response to temperature changes.

A widely used type of thin-film temperature sensors operate based on the principle that the electrical resistance of the thin-film material changes with temperature. Such temperature sensors are also referred to as thin-film resistive temperature detectors (thin-film RTDs). Platinum is the most common and widely preferred material for such thin-film temperature sensors exploiting predictable electrical properties due to its accuracy, stability, and wide operating range. Other materials like nickel, copper, chromium, aluminum, manganese, and silicon are used for specific applications depending on cost, temperature range, and environmental conditions.

Thus, in some embodiments, the thin-film temperature sensor is made from platinum (Pt), nickel (Ni), copper (Cu), chromium (Cr), aluminum (Al), Manganese (Mn), silicon (Si), or a combination of two or more thereof. In some embodiments, the thin-film temperature sensor is made from platinum (Pt), nickel (Ni), or chromium (Cr). In some embodiments, the thin-film temperature sensor is made from platinum (Pt).

Platinum is widely used in thin-film temperature sensors due to its high stability, linear temperature response, and excellent resistance to corrosion and oxidation.

Platinum Resistance Temperature Detectors, such as Pt100 sensors, having a nominal resistance of 100 ohms at 0 °C, and Pt1000 sensors, having a nominal resistance of 1000 ohms at 0 °C, are common types of thin-film temperature sensors.

Thermistors, like RTDs, operate based on the principle of resistance change with temperature, but are typically made from semiconductor materials such as metal oxides and exhibit a non-linear relationship between resistance and temperature.

Another widely used type of thin-film temperature sensors operate based on the principle that an electric output as a result of a thermoelectric Peltier-Seebeck effect changes with temperature. Such temperature sensors are also referred to as thin-film thermocouples (TFTCs). Such thin-film temperature sensors exploit the thermoelectric Peltier-Seebeck effect of a thermocouple which uses two dissimilar materials. One embodiment of such a thin-film temperature sensor is a so-called J-type thermocouple, which uses a combination of iron and Constantan, a copper-nickel alloy consisting of about 55% copper and 45% nickel. Another embodiment of such a thin-film temperature sensor is a so called K-type thermocouple, which uses a combination of Chromel, a nickel-chromium alloy consisting of about 90% nickel and 10% chromium, and Alumel, a nickel-aluminum alloy consisting of about 95% nickel, 2% aluminum, 2% manganese, and 1% silicon.

The skilled person understands that many other TFTCs besides the J-type and K-type TFTCs described here exist and may be employed in the thin-film temperature sensor arrangement of the present disclosure.

In some embodiments, the thin-film temperature sensor is a thin-film thermocouple (TFTC), a thin-film resistance temperature detector (RTD), or a thin-film thermistor, preferably a TFTC, and more preferably a J-type TFTC or a K-type TFTC.

In some embodiments, the thin-film temperature sensor is fabricated using a deposition process selected from a group consisting of chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof.

The thickness of the thin-film temperature sensor may typically be in the range of 10-1000 nm, preferably in the range of 15-500 nm, and more preferably in the range of 20-300 nm. In some embodiments, the thickness of the thin-film temperature sensor is in the range of 10-100 nm, such as in the range of 20-100 nm.

Integrating thin-film temperature sensors on metal substrates presents several technical challenges. The metal substrate may for example be made of stainless steel, aluminum, titanium, copper, or an alloy thereof. Stainless steel is often preferred because of its corrosion resistance, strength, thermal conductivity, hygienic properties, and resistance to high temperatures. Integrating thin-film temperature sensors on a metal substrate, and particularly on a stainless steel substrate has been found to be difficult. Integrating a thin-film temperature sensor onto a stainless steel surface presents challenges such as adhesion issues, thermal expansion mismatch, surface preparation, oxidation, and electrical insulation requirements. Addressing these challenges involves careful selection of materials, surface treatment, and deposition techniques to ensure reliable sensor performance, accuracy, and durability in the intended application. The inventors have found that the challenges associated with integrating thin-film temperature sensors on a metal substrate, and particularly on a stainless steel substrate, can be mitigated or overcome by a specific thin-film adhesion and electrical insulation layer separating the thin-film temperature sensor from the metal substrate.

The thin-film temperature sensor arrangement comprises a thin-film adhesion and electrical insulation layer on the metal substrate, wherein the thin-film adhesion and insulation layer comprises an inorganic oxide, an inorganic nitride or an inorganic oxynitride. The thin-film adhesion and electrical insulation layer preferably separates the thin-film temperature sensor from the metal substrate. In some embodiments, the thin-film temperature sensor is separated from the metal substrate by the thin-film adhesion and insulation layer.

In some embodiments, the thin-film adhesion and insulation layer comprises an inorganic oxide, preferably selected from the group consisting of silicon oxide (SiO₂ or SiOₓ), aluminum oxide (Al₂O₃), hafnium oxide (HfO₂), chromium oxide (Cr₂O₃), or zirconium oxide (ZrO₂), or a combination thereof.

For integrating thin-film temperature sensors on a metal substrate, and particularly on a stainless steel substrate, it has been found that metal oxides, and particularly certain metal oxides, are especially useful as thin-film adhesion and electrical insulation layers. In some embodiments, the inorganic oxide of the thin-film adhesion and electrical insulation layer is a metal oxide, more preferably aluminum oxide (Al₂O₃), hafnium oxide (HfO₂), chromium oxide (Cr₂O₃), or zirconium oxide (ZrO₂), or a combination of two or more thereof, and more preferably chromium oxide (Cr₂O₃) or zirconium oxide (ZrO₂), or a combination thereof. These metal oxides, and particularly Cr₂O₃ and ZrO₂, have been found effective for thin-film thermocouples because in addition to preventing electrical interference, they also provide good adhesive properties and allow the thermocouple to withstand the demands of high-temperature environments. Additionally, Cr₂O₃ and ZrO₂ have also been found to be easy to deposit on metal substrates.

In some embodiments, the thin-film adhesion and insulation layer comprises an inorganic nitride, preferably selected from the group consisting of chromium nitride (CrₓN_{y}), aluminum nitride (AlN), or a combination thereof.

In some embodiments, the thin-film adhesion and insulation layer comprises an inorganic oxynitride, preferably titanium oxynitride Ti(OₓN_{y}).

In some embodiments, the thin-film adhesion and insulation layer is fabricated using a deposition process selected from a group consisting of chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof. In some embodiments, the thin-film adhesion and insulation layer is fabricated using sol-gel based methods.

The thickness of the thin-film adhesion and electrical insulation layer may typically be in the range of 10-1000 nm, preferably in the range of 15-500 nm, and more preferably in the range of 20-300 nm.

In some embodiments, the thin-film temperature sensor is covered, at least partially, by a protective layer, preferably a thin-film protective layer.

Applying a protective layer on top of a thin-film temperature sensor can enhance the durability, reliability, and accuracy of the sensor in challenging environments such as in a heat exchanger. The protective layer can act as a buffer, preventing mechanical damage to the thin-film temperature sensor and enhancing its durability. The protective layer can act as a barrier to oxygen and other corrosive elements, preserving the integrity of the thermocouple materials over time. Additionally, protective layer may also serve as an electrical insulator to prevent electrical interference that could otherwise cause measurement errors or noise.

In some embodiments, the protective layer comprises an inorganic oxide. In some embodiments, the protective layer comprises aluminum oxide (Al₂O₃), silicon oxide (SiO₂ or SiOₓ), zirconium dioxide (ZrO₂), magnesium oxide (MgO), tantalum oxide (Ta₂O₅), hafnium oxide (HfO₂), chromium oxide (Cr₂O₃), or zirconium oxide (ZrO₂), or a combination of two or more thereof.

For integrating thin-film temperature sensors on a metal substrate, and particularly on a stainless steel substrate, it has been found that metal oxides, and particularly certain metal oxides, are especially useful as protective layers. In some embodiments, the inorganic oxide of the protective layer is a metal oxide, more preferably aluminum oxide (Al₂O₃), hafnium oxide (HfO₂), chromium oxide (Cr₂O₃), or zirconium oxide (ZrO₂), or a combination of two or more thereof, and more preferably chromium oxide (Cr₂O₃) or zirconium oxide (ZrO₂), or a combination thereof. These metal oxides, and particularly Cr₂O₃ and ZrO₂, have been found effective as protective layers for thin-film thermocouples because in addition to providing mechanical protection, they also prevent electrical interference, provide good adhesive properties and allow the thermocouple to withstand the demands of high-temperature environments. Additionally, Cr₂O₃ and ZrO₂ have also been found to be easy to deposit on a stainless steel substrate.

In some embodiments, the protective layer comprises an inorganic nitride, preferably selected from the group consisting of chromium nitride (CrₓN_{y}), aluminum nitride (AlN), or a combination thereof.

In some embodiments, the protective layer comprises an inorganic oxynitride, preferably titanium oxynitride Ti(OₓN_{y}).

In some embodiments, the protective layer is fabricated using a deposition process selected from a group consisting of chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof. In some embodiments, the protective layer is fabricated using sol-gel based methods.

In some embodiments, the protective layer has the same composition as the thin-film adhesion and electrical insulation layer.

The thickness of the protective layer may typically be in the range of 10-1000 nm, preferably in the range of 15-500 nm, and more preferably in the range of 20-300 nm.

The thin-film temperature sensor may for example be deposited on a substrate using a masking technique. Masking techniques involve the use of a mask, designed to define the sensor pattern, which is aligned and applied on the substrate. Thin-film sensor material, e.g. platinum or nickel, is then deposited through the openings in the mask.

The mask is then removed, leaving the desired sensor pattern. Masking techniques of this type are well known and available to the skilled person.

The skilled person understands that the thin-film temperature sensors of the present disclosure can be applied to a variety of metal substrates in numerous industries.

The thin-film temperature sensor arrangement of the present disclosure has been found to be of particular use for measuring temperatures inside of heat exchangers, and particularly inside gasketed plate heat exchangers (GPHE).

Thus, in some embodiments, the thin-film temperature sensor arrangement of the present disclosure is a part for a heat exchanger or a part of a heat exchanger. In some embodiments, the metal substrate is a heat exchanger plate for a gasketed plate heat exchanger (GPHE).

The general design of gasketed plate heat exchangers (GPHE) and the heat exchanger plates used therein are well known to the skilled person. A heat exchanger plate for a gasketed plate heat exchanger (GPHE) comprises a base plate, typically made of stainless steel, aluminum, titanium, copper, or an alloy thereof. The base plate has a heat transfer area which typically features corrugations that enhance heat exchange by increasing surface area and turbulence. A gasket path surrounds the heat transfer area and is preferably configured to house a gasket that prevent fluid mixing and leakage. The gasket path may for example comprise a groove in the base plate configured to receive the gasket. The edge area includes the outer perimeter of the base plate, beyond the gasket path. It provides additional mechanical support and stability to the plate.

The present inventors have identified that to address the challenges associated with current technologies, there is a need for a more integrated temperature sensing solution within the heat exchanger plates themselves. Thin-film temperature sensors provide an advantageous solution due to their compactness, high accuracy, and ability to be directly incorporated into or onto the heat exchanger plate during manufacturing.

The design of the thin-film temperature sensors also allows for the measured signal to be efficiently relayed from a sensing portion of the thin-film temperature sensor in the heat transfer area to an external connection point on the edge area of the base plate with minimal effects on the structural integrity and function of the heat exchanger. Thus, in preferred embodiments, the thin-film temperature sensor comprises a sensing portion in the heat transfer area and electrical leads extending to a connection point into the edge area. The term integrated as used herein in connection with the thin-film temperature sensor refers to the seamless incorporation of the sensor, including both the sensing portion and the electrical leads, directly onto the surface of the base plate. The sensor is a functional part of the plate itself, rather than being added as a separate component. The integration may for example involve embedding or depositing the thin-film sensor material onto the base plate using techniques like chemical vapor deposition, physical vapor deposition, atomic layer deposition, sputtering, or cathodic arc deposition, or a combination of two or more thereof. In some embodiments, the thin-film temperature sensor is fabricated using sol-gel based methods.

The integrated sensor enables real-time monitoring of the temperature at the surface of the heat exchanger plate, allowing for precise control and optimization of the heat exchange process. By being directly integrated with the plate, the sensor provides more accurate temperature readings at the point of heat transfer, without interfering with the plate's mechanical structure or fluid flow dynamics.

These sensors can offer real-time temperature measurements with minimal interference to the fluid flow, significantly improving the monitoring of heat transfer performance within the GPHE.

Another advantage of the design of the integrated thin-film temperature sensors is that it also allows for a plurality of the sensors to be provided on the heat exchanger plate.

Plates equipped with a plurality of thin-film sensors allow for temperature measurements at different locations within the heat exchanger, providing a more comprehensive understanding of temperature distribution. This is particularly useful in large or complex GPHEs, where temperature gradients can exist due to variations in flow rates, fluid properties, or heat loads. Accurate, real-time data from multiple points enables better insight into the heat exchanger's performance.

In a GPHE, uneven temperature distribution can occur due to flow imbalances or fouling. Placing a plurality of thin-film temperature sensors on the same plate can enable operators to identify temperature gradients and detect potential hot or cold spots. This helps in diagnosing issues such as fouling, improper flow distribution, or poor thermal contact, enabling corrective action before efficiency is significantly compromised.

In some embodiments, the integrated thin-film temperature sensor is arranged on the first surface of the base plate.

In some embodiments, the integrated thin-film temperature sensor is arranged on the second surface of the base plate.

In some embodiments, the base plate comprises two or more integrated thin-film temperature sensors configured to measure temperatures at different positions in the heat transfer area.

In some embodiments, the base plate comprises at least one integrated thin-film temperature sensor arranged on the first surface of the base plate and at least one integrated thin-film temperature sensor arranged on the second surface of the base plate. In some embodiments, at least one integrated thin-film temperature sensor arranged on the first surface of the base plate and at least one integrated thin-film temperature sensor arranged on the second surface of the base plate are arranged with a mirrored configuration. In other words, at least one integrated thin-film temperature sensor arranged on the first surface of the base plate and at least one integrated thin-film temperature sensor arranged on the second surface are arranged on opposite sides of the base plate in the same location of the heat transfer area. This allows for the temperature to be measured simultaneously on the hot side and the cold side of the plate in the same location of the heat transfer area.

In some embodiments, the base plate comprises two or more integrated thin-film temperature sensors arranged on the first surface of the base plate and configured to measure temperatures at different positions in the heat transfer area.

In some embodiments, the base plate comprises two or more integrated thin-film temperature sensors arranged on the second surface of the base plate and configured to measure temperatures at different positions in the heat transfer area.

Each of the two or more integrated thin-film temperature sensors may be further defined as set out above with reference to the first aspect.

According to a second aspect, there is provided a gasketed plate heat exchanger (GPHE), comprising a plurality of heat exchanger plates separated by gaskets to define several first plate interspaces for a first fluid and several second plate interspaces for a second fluid, characterised in that at least one of the heat exchanger plates is a heat exchanger plate as described herein with reference to the first aspect.

A gasketed plate heat exchanger (GPHE) is a type of heat exchanger consisting of a stack of heat exchanger plates wherein adjacent heat exchanger plates are separated by gaskets to form alternating channels for two fluids, enabling heat exchange between them. The GPHE is designed with first plate interspaces for the flow of a first fluid and second plate interspaces for the flow of a second fluid. These interspaces are arranged so that the two fluids may pass through the heat exchanger in counterflow, crossflow, or parallel flow without mixing, as they are separated by the plates and gaskets.

The heat exchanger consists of a plurality of plates, separated by gaskets that define the interspaces for the fluids. Each heat exchanger plate comprises a base plate, typically made of stainless steel, aluminum, titanium, copper, or an alloy thereof. The base plate has a heat transfer area which typically features corrugations that enhance heat exchange by increasing surface area and turbulence. A gasket path, typically in the form of a groove in the base plate, surrounds the heat transfer area and is preferably configured to house a gasket that prevents fluid mixing and leakage. The edge area includes the outer perimeter of the base plate, beyond the gasket path. It provides additional mechanical support and stability to the plate.

Gaskets are placed around the periphery of the plates to create sealed channels for the respective fluids and to prevent leakage and cross-contamination. They are strategically positioned along the gasket paths, defining the separation between the heat transfer area and the edge area of each plate.

At least one of the heat exchanger plates in the GPHE is a heat exchanger plate as described herein with reference to the first aspect, characterized by the integration of a thin-film temperature sensor in the heat transfer area. The integrated thin-film temperature sensor is configured to measure a temperature in the heat transfer area.

The sensor is integrated on the base plate and thanks to the thin-film design it is minimally intrusive, allowing it to function without significantly affecting the heat transfer efficiency or the structural integrity of the base plate.

The integration of the thin-film sensor enables accurate temperature control and monitoring, which is useful for optimizing the performance of the heat exchanger and ensuring safe operation.

At least one of the heat exchanger plates is a heat exchanger plate as described herein with reference to the first aspect, but it is understood that in some embodiments, two or more of the heat exchanger plates are heat exchanger plates as described herein with reference to the first aspect. In some embodiments, at least 1/10, 1/5, 1/3, or 1/2 of the heat exchanger plates are heat exchanger plates as described herein with reference to the first aspect. In some embodiments all of the heat exchanger plates are heat exchanger plates as described herein with reference to the first aspect. Having two or more heat exchanger plates as described herein with reference to the first aspect in the GPHE offers several advantages that enhance performance monitoring, control, and overall efficiency.

Multiple plates equipped with thin-film sensors allow for temperature measurements at different locations within the heat exchanger, providing a more comprehensive understanding of temperature distribution. This is particularly useful in large or complex GPHEs, where temperature gradients can exist due to variations in flow rates, fluid properties, or heat loads. Accurate, real-time data from multiple points enables better insight into the heat exchanger's performance.

Data from multiple thin-film sensors can be fed into process control systems to optimize the operation of the GPHE. By monitoring the temperatures at various stages within the heat exchanger, operators can fine-tune variables such as fluid flow rates, inlet temperatures, and pressure to maintain optimal heat transfer efficiency. This level of control can lead to energy savings, reduced operational costs, and improved overall system performance. Data from multiple thin-film sensors can also be used in the design phase of a GPHE. By monitoring the temperatures at various stages within the heat exchanger, the designer can adapt the design of the plates and GPHE based on the data.

With multiple temperature measurements, it is possible to obtain a more accurate calculation of the heat transfer rates within the GPHE. This allows for better monitoring of thermal performance, helping operators ensure the heat exchanger is operating at its designed efficiency. Accurate heat transfer data may be important in industries where precise temperature control is needed, such as in chemical processing, food and beverage, or pharmaceuticals.

By equipping multiple plates with thin-film sensors, operators can detect changes in performance more quickly and accurately. If a plate starts to show abnormal temperature readings, it could indicate early signs of fouling, scale buildup, or flow obstruction. Identifying these issues early allows for preventive maintenance or cleaning, reducing the risk of unplanned downtime or costly repairs.

Having sensors on multiple plates introduces redundancy, which improves the reliability of temperature monitoring. If one sensor fails, others can still provide critical temperature data, ensuring continuous monitoring without requiring immediate shutdown or repair of the heat exchanger. This increases system uptime and operational reliability.

In GPHEs, different fluids flow on either side of the heat exchanger plates. Multiple sensors can be used to monitor temperatures of fluids or plate surfaces at different points along the flow path, allowing for better control of the inlet and outlet temperatures of both the hot and cold fluids. This improves thermal balance and helps to maintain the desired temperature profiles for both streams, critical for processes where precision heating or cooling is required.

The use of multiple temperature sensors on various plates allows for advanced diagnostics, such as tracking how temperature variations change over time and under different operating conditions. This data can be used in predictive maintenance algorithms, enabling operators to predict when maintenance will be needed based on temperature trends, rather than relying on fixed intervals. This minimizes unplanned shutdowns and maximizes equipment lifespan.

Equipping multiple plates with sensors can help validate the temperature readings and improve the accuracy of calibration. By comparing temperature data across different plates, inconsistencies or sensor malfunctions can be detected and corrected. This validation ensures the reliability of the temperature data being used for process control.

Equipping two or more plates with thin-film temperature sensors in a GPHE greatly improves the ability to monitor, control, and optimize heat exchanger performance. It provides detailed, real-time temperature data, enhances the accuracy of heat transfer measurements, allows for the early detection of issues, and supports advanced process control and diagnostics. This leads to improved efficiency, reduced maintenance costs, and increased operational reliability.

The first and second fluids refer to the two distinct fluids between which heat is exchanged. The fluids can be gases or liquids, and they are separated by the heat exchanger plates to prevent direct mixing while allowing thermal energy to transfer from one fluid to the other. The fluids used in a GPHE depend on the specific application. Examples of fluids include, but are not limited to water-based fluids, such as hot water, cold water, steam, brine, seawater, glycol solutions, and brine solutions, refrigerants, such as ammonia, r-134a, HFCs, and HCFCs, process fluids, such as chemicals solutions, solvents, and sludge, oils, such as thermal oil, hydraulic oil, and transformer oil, and air and gases, condensing fluids, and evaporating fluids.

The gaskets in the GPHE serve several functions, primarily ensuring fluid separation, maintaining a tight seal between the plates, and directing the fluids flow through the designated channels. The gaskets are positioned between each pair of adjacent heat exchanger plates and create a leak-proof seal, preventing the fluids from mixing while allowing for efficient heat transfer.

The gaskets in GPHEs are typically made from elastomeric materials that offer flexibility, chemical resistance, and durability to withstand different operational conditions, including temperature, pressure, and chemical exposure. Common materials used include nitrile rubber (NBR), ethylene propylene diene monomer (EPDM), fluoroelastomers, silicone, and neoprene. The choice of material depends on the fluids being processed, the temperature and pressure ranges, and the overall system design.

The gaskets provide a seal between adjacent plates to prevent the mixing of fluids. Each gasket covers the perimeter of the plate, ensuring the first and second fluids flow through designated channels without leaking into each other's flow paths.

The gaskets are designed with specific patterns and cutouts that guide the fluids into the proper channels. They ensure that the fluids follow the intended paths between the plates, promoting efficient counterflow or parallel flow, depending on the heat exchanger design.

The second aspect may generally have the same features and advantages as the first aspect. It is further noted that the disclosure relates to all possible combinations of features, unless explicitly stated otherwise.

### Brief Description of the Drawings

The above, as well as additional object, features, and advantages of the present disclosure will be better understood through the following illustrative and nonlimiting detailed description of examples of the present disclosure, with reference to the appended drawings, where the same reference numerals will be used for similar elements, wherein:
Fig 1 discloses a front view of a plate heat exchanger comprising a plurality of heat exchanger plates according to a first embodiment of the invention.
Fig 2 discloses a side view of the plate heat exchanger along the line II-II in Fig 1.
Fig 3 discloses a schematic front view of a heat exchanger plate of the plate heat exchanger in Fig 1.

As illustrated in the figures, the sizes of the elements and features may be exaggerated for illustrative purposes and, thus, are provided to illustrate the general structures of the examples. Like reference numerals refer to like elements throughout.

### Detailed Description

The thin-film temperature sensor arrangement of the present disclosure will now be described in more detail with reference to an embodiment wherein the metal substrate is a heat exchanger plate for a gasketed plate heat exchanger (GPHE). However, it is understood that the thin-film temperature sensor arrangement may also be used in an analogous manner in many other applications where a thin-film temperature sensor arranged on a metal substrate is required or beneficial.

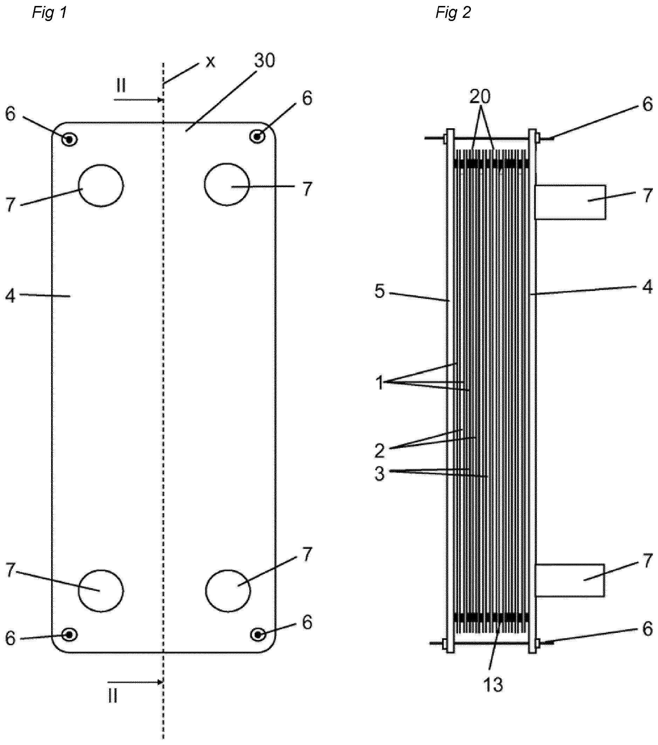

Figs 1 and 2 show a plate heat exchanger comprising a plurality of heat exchanger plates 1 forming a plate package. The heat exchanger plates 1 are arranged beside each other to define several first plate interspaces 2 for a first medium and several second plate interspaces 3 for a second medium. The first plate interspaces 2 and the second plate interspaces 3 are arranged in an alternating order in the plate package. The heat exchanger plates 1 of the plate package are pressed against each other between a frame plate 4 and a pressure plate 5 by means of tie bolts 6. In the embodiments disclosed, the plate heat exchanger comprises four porthole channels 7 forming an inlet and an outlet for the first medium and an inlet and an outlet for the second medium, respectively.

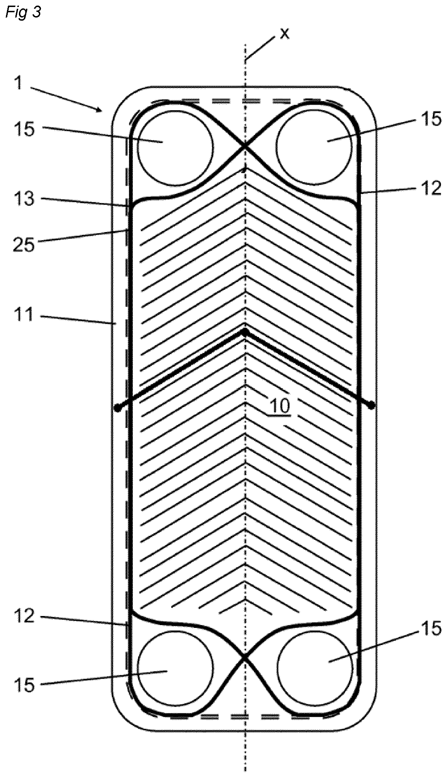

One of the heat exchanger plates 1 is disclosed in Fig 3. The heat exchanger plate 1 comprises a base plate having a first surface and a second surface, wherein the first surface is configured to be in contact with a first fluid, and the second surface is configured to be in contact with a second fluid for the purpose of heat transfer between the first and second fluids. The base plate has a heat transfer area 10 and an edge area 11, which extends around and outside the heat transfer area 10. The edge area 11 comprises the outer surrounding edge of the heat exchanger plate 1. The heat exchanger plate 1 also comprises a gasket path 12, which extends around the heat transfer area 10, separating the heat transfer area 10 and the edge area 11. A gasket 13 is provided on the gasket path 12 and extends around and encloses the heat transfer area 10.

In the embodiments disclosed, four portholes 15 are provided and extend through the heat exchanger plate 1. The portholes 15 are located inside and in the proximity of the edge area 11. The portholes 15 are aligned with the porthole channels 7.

In the embodiments disclosed, the plate heat exchanger is mounted and held together by means of the tie bolts 6 and the gaskets 13. It is to be noted, however, that the invention is applicable also to plate heat exchangers of other kinds. Some of heat exchanger plates 1 may for instance be permanently connected to each other by means of welding, such as laser welding or electron beam welding, gluing or even brazing. An example of an alternative mounting of the heat exchanger plates 1, is a so called semi-welded plate heat exchanger where the heat exchanger plates are welded to each other in pairs, and the welded pairs of heat exchanger plates are pressed against each other by means of tie bolts with gasket provided between the adjacent welded pairs of heat exchanger plates.

In the disclosed embodiment, each heat exchanger plate 1 comprises an integrated thin-film temperature sensor configured to measure a temperature in the heat transfer area. The integrated thin-film temperature sensor comprises a sensing portion in the heat transfer area and electrical leads extending to a connection point into the edge area.

The thin-film temperature sensor is integrated on the base plate by depositing the thin-film adhesion and electrical insulation layer on the metal substrate, and then depositing the thin-film temperature sensor on the thin-film adhesion and insulation layer.

The thin-film adhesion and electrical insulation layer and the thin-film temperature sensor is deposited on the base plate using a technique selected from chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof. In some embodiments, the thin-film adhesion and insulation layer and/or the thin-film temperature sensor is fabricated using sol-gel based methods.

The integrated sensor enables real-time monitoring of the temperature at the surface of the heat exchanger plate, allowing for precise control and optimization of the heat exchange process. By being directly integrated with the plate, the sensor provides more accurate temperature readings at the point of heat transfer, without interfering with the plate's mechanical structure or fluid flow dynamics.

These sensors can offer real-time temperature measurements with minimal interference to the fluid flow, significantly improving the monitoring of heat transfer performance within the GPHE.

Any type of thin-film temperature sensor may be used for the heat exchanger plate of the present disclosure. The type of thin-film temperature sensor to be used for a particular heat exchanger plate may depend on the operating temperature range, material compatibility, and environmental conditions associated with the intended application. In some embodiments, the thin-film temperature sensor is a thin-film thermocouple (TFTC), a thin-film resistance temperature detector (RTD), or a thin-film thermistor, preferably a TFTC, and more preferably a J-type TFTC or a K-type TFTC.

In the embodiment of Figs 1 and 2 the thin-film temperature sensor is a K-type TFTC. The thin-film temperature sensor has a sensing portion in the heat transfer area and electrical leads extending to a connection point into the edge area. The metals in a K-type thermocouple form a junction, the sensing portion, and temperature differences between the junction and the reference end generate a voltage that is proportional to temperature. The materials used in a K-type thermocouple are Chromel, a nickel-chromium alloy consisting of about 90% nickel and 10% chromium, and Alumel, a nickel-aluminum alloy consisting of about 95% nickel, 2% aluminum, 2% manganese, and 1% silicon. These materials create a voltage that correlates with temperature differences according to the Peltier-Seebeck effect, allowing the K-type thermocouple to function effectively over a broad temperature range. The thin-film temperature sensor comprises two electrical leads extending from the sensing portion to two connection points to the edge area

The thin-film temperature sensor is separated from the base plate by a thin-film adhesion and electrical insulation layer. In the embodiment of Figs 1 and 2 the thin-film adhesion and electrical insulation layer is formed of aluminum oxide (Al₂O₃).

The thickness of the thin-film adhesion and electrical insulation layer may typically be in the range of 10-1000 nm, preferably in the range of 15-500 nm, and more preferably in the range of 20-300 nm.

To accurately measure temperature using the thin-film temperature sensor, several additional pieces of equipment may be required (not shown), including one or more of a power supply or constant current source, a signal conditioning circuit (e.g. amplifiers, filters, cold junction compensation), a data acquisition system (DAQ) and software or high-precision multimeter, wiring and connectors (low-resistance, thermocouple connectors), and calibration equipment (reference thermometer or calibrator). The skilled person knows this equipment and how to combine it in various applications.

Thin-film temperature sensors, such as thin-film resistive temperature detectors (RTDs), often require a small current or voltage to function. A stable DC power supply or constant current source can be used to energize the sensor.

Since the electrical output from a thin-film sensor (such as a change in resistance for an RTD or a voltage for thermocouples) can be quite small, signal conditioning may be needed to prepare the signal for accurate reading. This can include amplifiers to boost small signals from the sensor, filters to remove noise from the signal, particularly in environments with electromagnetic interference (EMI), cold junction compensation to correct for the reference junction temperature in thermocouple-based sensors.

A data acquisition system (DAQ) can be used to convert the conditioned analog signal from the sensor over time into digital data that can be stored and analyzed. The DAQ may include software to interface with the DAQ, configure sensor input types, and analyze or log temperature data. A high-precision multimeter can be used for simple and direct measurement of the sensor's output, e.g., resistance for an RTD or voltage for a thermocouple.

Low-resistance wiring allows for accurate temperature measurement, especially when using resistive sensors like RTDs, where the resistance of the leads could introduce errors. For precise RTD measurements, a 4-wire setup is often used to eliminate the effects of lead resistance.

For thin-film thermocouples, special thermocouple-compatible connectors may be used to avoid introducing unwanted thermoelectric effects (Peltier-Seebeck effect) that could distort the reading.

In some applications, a temperature controller is used to manage and maintain the temperature at specific levels based on the sensor feedback.

Additionally, variations to the disclosed embodiments can be understood and effected by the skilled person in practising the claimed invention, from a study of the drawing, the disclosure, and the appended claims. Moreover, in the drawings and specification, there have been disclosed preferred examples of the invention and, although specific terms are employed, they are used in a generic and descriptive sense only and not for the purpose of limitation. The scope of the invention is set forth in the following claims, in which the word 'comprising' does not exclude other elements or steps, and the indefinite article 'a' or 'an' does not exclude a plurality.

## Claims

1. A thin-film temperature sensor arrangement comprising
a metal substrate,
a thin-film adhesion and electrical insulation layer on the metal substrate, and
a thin-film temperature sensor on the thin-film adhesion and insulation layer,
wherein the thin-film adhesion and insulation layer comprises an inorganic oxide, an inorganic nitride or an inorganic oxynitride.

2. The thin-film temperature sensor arrangement of claim 1, wherein the metal substrate is made from metal selected from the group consisting of stainless steel, aluminum, titanium, copper, or an alloy thereof, and more preferably stainless steel.

3. The thin-film temperature sensor arrangement of any one of the preceding claims, wherein the thin-film temperature sensor is separated from the metal substrate by the thin-film adhesion and insulation layer.

4. The thin-film temperature sensor arrangement of any one of the preceding claims, wherein the thin-film adhesion and insulation layer comprises an inorganic oxide, preferably selected from the group consisting of silicon oxide (SiO₂ or SiOₓ), aluminum oxide (Al₂O₃), hafnium oxide (HfO₂), chromium oxide (Cr₂O₃), or zirconium oxide (ZrO₂), or a combination thereof.

5. The thin-film temperature sensor arrangement of any one of the preceding claims, wherein the inorganic oxide is a metal oxide, more preferably aluminum oxide (Al₂O₃), hafnium oxide (HfO₂), chromium oxide (Cr₂O₃), or zirconium oxide (ZrO₂), or a combination of two or more thereof, and more preferably chromium oxide (Cr₂O₃) or zirconium oxide (ZrO₂), or a combination thereof.

6. The thin-film temperature sensor arrangement of any one of the preceding claims, wherein the thin-film adhesion and insulation layer comprises an inorganic nitride, preferably selected from the group consisting of chromium nitride (CrₓN_{y}), aluminum nitride (AlN), or a combination thereof.

7. The thin-film temperature sensor arrangement of any one of the preceding claims, wherein the thin-film adhesion and insulation layer comprises an inorganic oxynitride, preferably titanium oxynitride Ti(Oₓ,N_{y}).

8. The thin-film temperature sensor arrangement of any one of the preceding claims, wherein the thin-film adhesion and insulation layer is fabricated using a deposition process selected from a group consisting of chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof.

9. The thin-film temperature sensor arrangement of any one of the preceding claims, wherein the thin-film temperature sensor comprises a sensing portion and electrical leads.

10. The thin-film temperature sensor arrangement of any one of the preceding claims, wherein the thin-film temperature sensor is a thin-film thermocouple (TFTC), a thin-film resistance temperature detector (RTD), or a thin-film thermistor, preferably a TFTC, and more preferably a J-type TFTC or a K-type TFTC.

11. The thin-film temperature sensor arrangement of any one of the preceding claims, wherein the thin-film temperature sensor is fabricated using a deposition process selected from a group consisting of chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof.

12. The thin-film temperature sensor arrangement of any one of the preceding claims, wherein the thin-film temperature sensor is covered, at least partially, by a protective layer, preferably a thin-film protective layer.

13. The thin-film temperature sensor arrangement of claim 12, wherein the protective layer comprises an inorganic oxide, an inorganic nitride or an inorganic oxynitride, preferably a metal oxide, more preferably aluminum oxide (Al₂O₃), hafnium oxide (HfO₂), chromium oxide (Cr₂O₃), or zirconium oxide (ZrO₂), or a combination of two or more thereof, and more preferably chromium oxide (Cr₂O₃) or zirconium oxide (ZrO₂), or a combination thereof.

14. The thin-film temperature sensor arrangement of any one of claims 12-13, wherein the protective layer is fabricated using a deposition process selected from a group consisting of chemical vapor deposition, physical vapor deposition, atomic layer deposition, sputtering, or cathodic arc deposition, or a combination of two or more thereof, preferably selected from a group consisting of chemical vapor deposition or physical vapor deposition, or a combination thereof.

15. The thin-film temperature sensor arrangement of any one of the preceding claims, wherein the metal substrate is a heat exchanger plate for a gasketed plate heat exchanger (GPHE).
